# EUROPEAN PATENT SPECIFICATION

(11) **EP 2 113 163 B1**
(45) Date of publication and mention of the grant of the patent: **20.06.2012**
(21) Application number: 09075292.4
(22) Date of filing: 24.04.2007
(51) Int. Cl.: A01D 78/10, A01B 69/00

(54) **A haymaking machine**
Heuerntemaschine
Machine à fenaison

(30) Priority: 02.05.2006 NL 1031730; 24.05.2006 NL 1031873
(43) Date of publication of application: 04.11.2009
(62) Divisional of application: 07075307.4
(73) Proprietor: Maasland N.V., 3147 PA Maassluis (NL)
(72) Inventor: Stremmelaar, Egbert Antoine, 7846 AD Noord-Sleen (NL)
(74) Representative: Corten, Maurice Jean F.M.

(56) References cited:
- EP-A1- 0 559 024
- DE-A1- 4 201 881
- DE-A1- 10 317 812
- DE-U1- 8 807 385
- FR-A- 2 438 414

## Description

The invention relates to a haymaking machine provided with a drawbar whose front end is fastened pivotably about a substantially upwardly orientated connecting axis to a trestle extending substantially transverse to the drawbar, and whose rear end is provided with a supporting wheel set comprising two wheels disposed on either side of the drawbar, a pair of drivable crop processing members arranged on either side of the drawbar and rotatable about substantially upwardly orientated rotor axes being disposed between said front end and rear end, the orientation of the wheels relative to the drawbar being adjustable by means of a steering device, the steering device comprising a steering rod which is pivotably connected both with the trestle and with the wheel set, and a hydraulic cylinder which has one end connected with the steering rod and its other end with the wheel set, characterized in that the haymaking machine is adjustable into at least three operative positions while maintaining the direction of rotation of the crop processing members: a first operative position with a first working width in which the drawbar with crop processing members, seen in the normal direction of travel, is located straight behind a pulling vehicle and in which one swath is deposited, a second operative position with a second working width that is smaller than the first working width, in which the drawbar with crop processing members is located at a first, positive angle with respect to the normal direction of travel behind the pulling vehicle and in which one swath is deposited, and a third operative position, in which the drawbar with crop processing members is located at a second, negative angle with respect to the normal direction of travel behind the pulling vehicle and in which two swaths are deposited.

In a favourable embodiment, the first, positive angle is such an angle that, seen in the normal direction of travel, the drawbar is located on the right side behind the pulling vehicle and the second, negative angle is such an angle that, seen in the normal direction of travel, the drawbar is located on the left side behind the pulling vehicle.

With such a haymaking machine, in the second operative position the crop processing members are orientated in such a way that the sideward forces exerted by the wheel set on the drawbar are opposite to the sideward forces exerted by the rotating crop processing members on the drawbar.

A haymaking machine according to the preamble of claim 1 is known from EP-B1-0 559 024. Although in general such a haymaking machine functions satisfactory, in particular in case of very heavy crop there is a need for increasing the overlap of the rotors, i.e. reducing the working width, in order to keep the forces acting on the rotors within workable limits and to form smaller swaths.

It is inter alia an object of the present invention to satisfy this need. For this purpose, according to the invention, a haymaking machine of the type mentioned in the preamble additionnally comprises the features mentioned in the characterizing part of claim 3. Owing to the fact that one end of the hydraulic cylinder can be connected either with one end of the steering plate or with the other end of the steering plate, the working width of the haymaking machine can be adjusted at a desired width. It is possible to bring the haymaking machine according to the invention into an additional operative position relative to the known haymaking machine by changing the fastening place of one end of the hydraulic cylinder.

The steering axis is preferably located at least substantially in the middle of the drawbar. It is in particular advantageous if the steering axis is fastened in a stop seating plate which is disposed at least substantially transverse to the steering axis and which is provided with stop seatings orientated towards the stop.

In order to prevent that, when sharper bends are taken at the moment when the stop is already abutted against the stop seating, the steering rod, or other components of the haymaking machine, is excessively loaded, the hydraulic cylinder is connected with a hydraulic circuit in which a pressure relief valve is included. It will be obvious that, besides a pressure relief valve, equivalent means exercising a comparable function, such as a sequence valve, may also be included in the hydraulic circuit.

The invention also relates to a haymaking machine provided with a drawbar whose front end is fastened pivotably about a substantially upwardly orientated connecting axis to a trestle extending substantially transverse to the drawbar, and whose rear end is provided with a supporting wheel set comprising two wheels disposed on either side of the drawbar, a pair of drivable crop processing members arranged on either side of the drawbar and rotatable about substantially upwardly orientated rotor axes being disposed between said front end and rear end, the orientation of the wheels relative to the drawbar being adjustable by means of a steering device, the steering device comprising a steering rod which is pivotably connected both with the trestle and with the wheel set, and a hydraulic cylinder which has one end connected with the steering rod and its other end with the wheel set, characterized in that the hydraulic cylinder is connected with a hydraulic circuit in which a pressure relief valve is included.

In order to be able to further adjust the width of the deposited swath, an embodiment of a haymaking machine according to the invention is provided with a carrier frame connected with the drawbar for carrying a crop processing member, the swath board being fastened to a swath board frame that is pivotably connected with the carrier frame about a substantially horizontally extending axis, the haymaking machine being in particular provided with a swath board cylinder for adjusting the orientation of the swath board relative to the direction of travel of the haymaking machine. In this case it is advantageous if one end of the swath board cylinder is connected with the swath board and the other end of the swath board cylinder is capable of being fastened in one of a number of fastening points located at different distances from the drawbar, the fastening points being provided on the swath board frame and/or the carrier frame.

The invention will be explained hereinafter by way of example with reference to an embodiment shown in the drawing.
Figure 1 is a schematic plan view of a haymaking machine according to the invention;

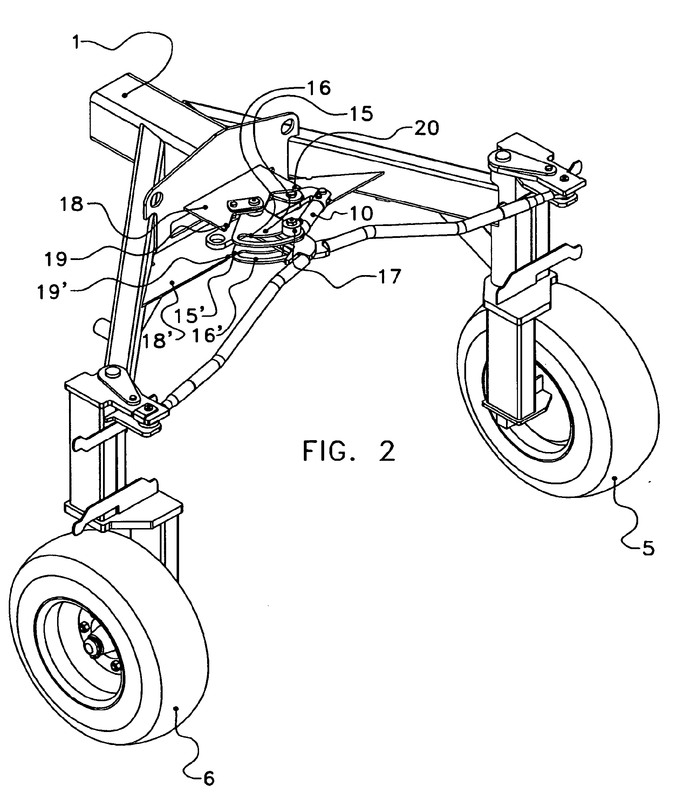

Figure 2 is a schematic perspective view of the rear part of the steering device according to the invention for adjusting the orientation of the wheel set;

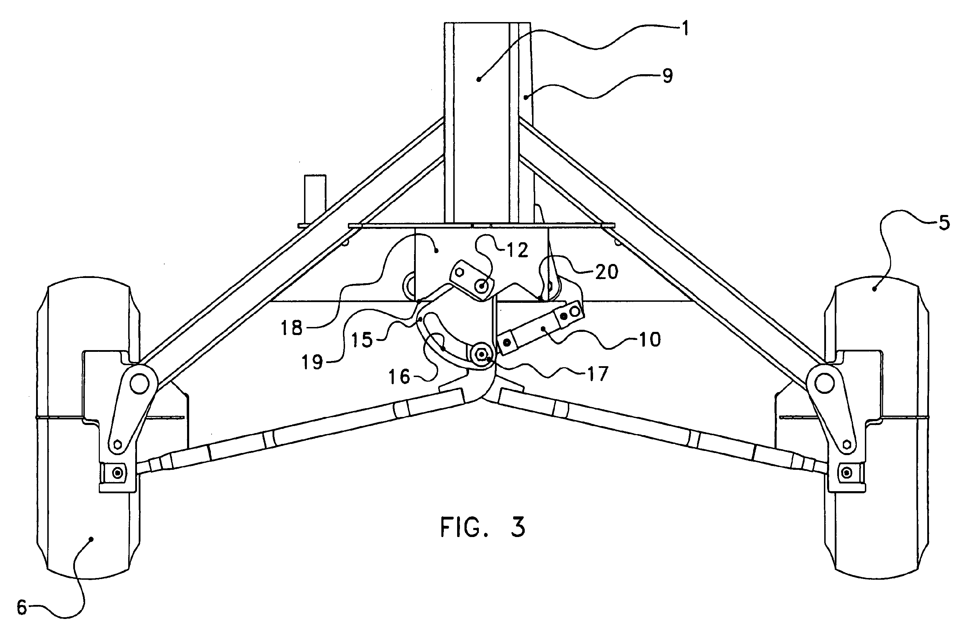

Figure 3 is a schematic plan view of the rear part of the steering device shown in Figure 2;
Figure 4 is a schematic perspective view of a detail of the rear part of the steering device shown in Figures 2 and 3, in which the steering plate is visible, the hydraulic cylinder being connected with one end of the steering plate;
Figure 5 is a schematic perspective view of the rear part of the steering device shown in Figures 2 and 3, in which the steering plate is visible, the hydraulic cylinder being connected with the other end of the steering plate;
Figure 6 is a schematic view of the hydraulic circuit with pressure relief valve, in which the hydraulic cylinder is included, and
Figure 7 is a schematic plan view of a crop processing member with an adjustable swath board to be used in a haymaking machine according to the present invention.

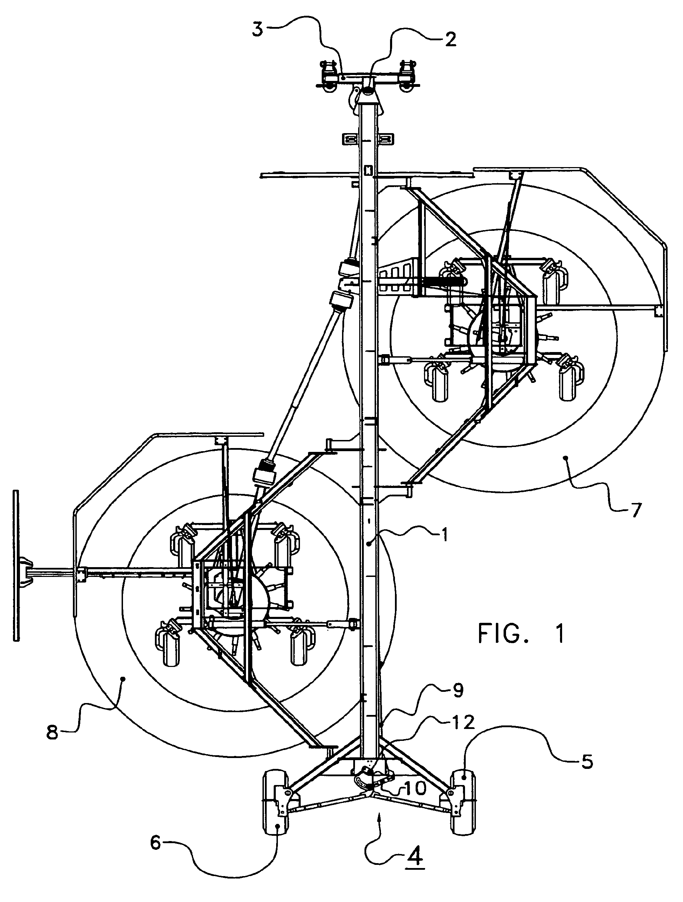

Figure 1 is a schematic plan view of an embodiment of a haymaking machine according to the present invention. The haymaking machine is provided with a drawbar 1 whose front end is fastened pivotably about a substantially upwardly orientated connecting axis 2 to a trestle 3 extending substantially transverse to the drawbar 1. The rear end of the drawbar 1 is provided with a supporting wheel set 4 comprising two wheels 5, 6 disposed on either side of the drawbar 1. A pair of drivable crop processing members 7, 8 arranged on either side of the drawbar 1 and rotatable about substantially upwardly orientated rotor axes is disposed between said front end and rear end of the drawbar 1.

The orientation of the wheels 5, 6 relative to the drawbar 1 is adjustable by means of a steering device. The steering device comprises a steering rod 9 which is pivotably connected both with the trestle 3 and with the wheel set 4, and a hydraulic cylinder 10 which has one end connected with the steering rod 9 and its other end with the wheel set 4.

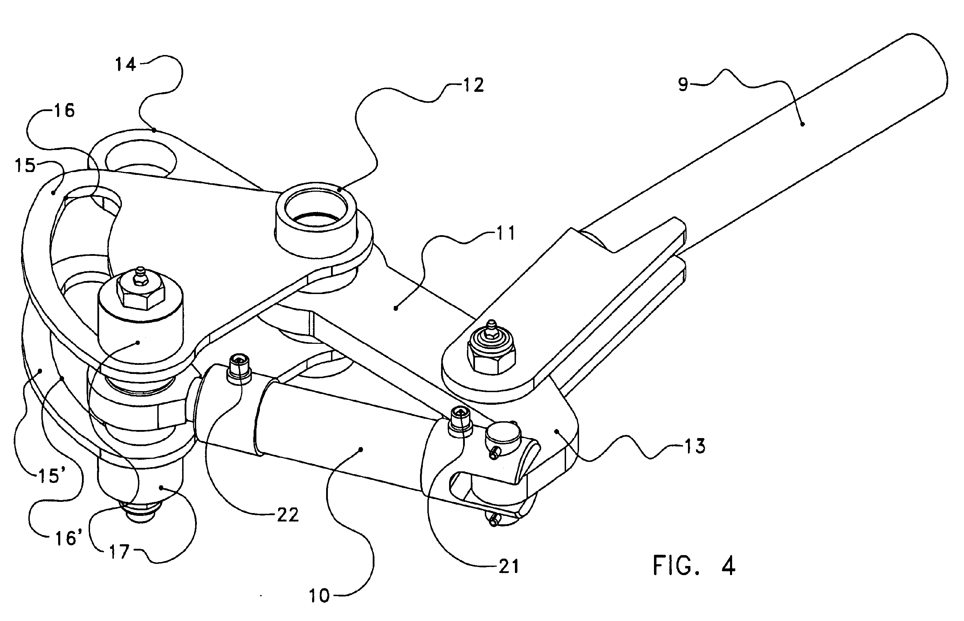

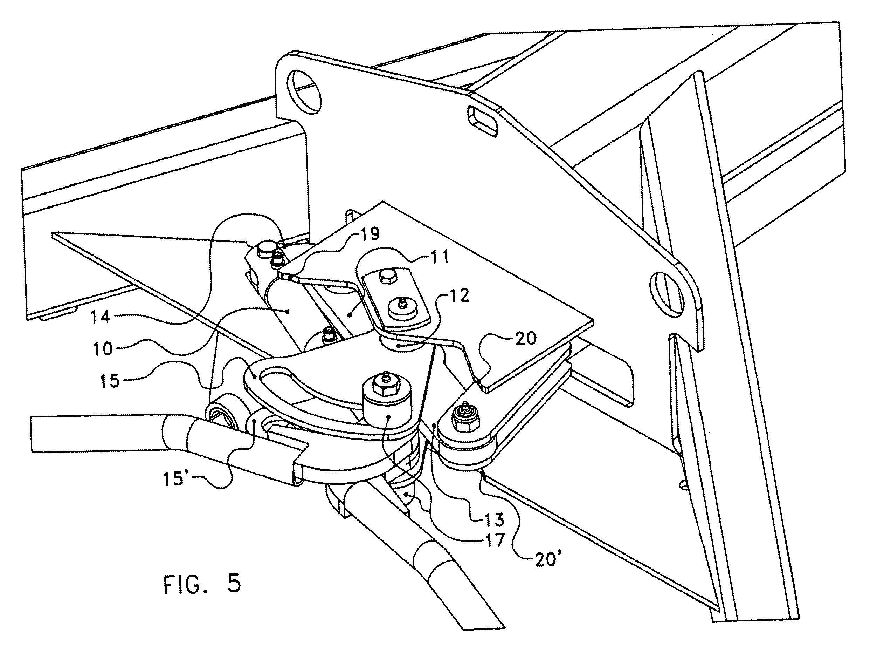

The haymaking machine is provided with a steering plate 11 fastened to the rear end of the drawbar 1 (Figure 4), which steering plate is pivotable about a substantially upwardly orientated steering axis 12 and comprises ends 13, 14 located on either side of the substantially upwardly orientated steering axis 12. The steering rod 9 is connected with one end (13 according to Figure 4, 14 according to Figure 5) of the steering plate 11. A stop plate (in the figures constituted by two sub-plates 15, 15') is disposed at least substantially transverse to the upward steering axis 12 and is connected with the steering axis 12. The stop plate 15, 15' is provided with an arched slot 16, 16' located at the side of the steering axis 12 opposite the trestle 3. One end of the hydraulic cylinder 10 is connectable with one end 13 or the other end 14 of the steering plate 11 and the other end of the hydraulic cylinder 10, which other end is connected with the wheel set 4, is fastened to a stop 17 which extends through the slot 16, 16' and is movably included in the slot 16, 16'. As shown in Figure 1, the steering axis 12 is located at least substantially in the middle of the drawbar 1 (or its prolonged end). By changing the connection of one end of the hydraulic cylinder 10 with one end 13 of the steering plate 11 into a connection of one end of the hydraulic cylinder 10 with the other end 14 it can be ensured that the haymaking machine is capable of assuming an additional operative position. In this additional operative position, the crop processing members are located at the other side of the pulling vehicle, two swaths being formed. Changing the connection place of the hydraulic cylinder 10 relative to the steering axis 12 may be effected, for example, by detaching the steering plate 11, turning it and attaching it again. Of course, it is also possible to detach the connection of one end of the hydraulic cylinder with one end of the steering plate and to attach one end of the hydraulic cylinder to the other end of the steering plate.

By operating the hydraulic cylinder, it is possible for the drawbar, and consequently for the crop processing members, to be brought into an operative position in a manner known per se.

It is thus possible to achieve three operative positions while maintaining the same direction of rotation of the crop processing members. The first of them is an operative position in which the drawbar 1, seen in the normal direction of travel, is disposed straight behind the pulling vehicle, so that the crop processing members 7, 8 are located symmetrically behind the drawbar 1. In this position, a single swath is deposited. In the second operative position, the drawbar 1, seen in the normal direction of travel, is located on the right side behind the pulling vehicle and has a smaller working width than in the first operative position because the crop processing members are disposed closer to each other. This second operative position is suitable, for example, for somewhat heavier crops that are deposited in a single swath. The third operative position can be achieved by turning the steering plate 11, or with the aid of other devices, such as for example hydraulic cylinders, the crop processing members 7, 8 being located, as described above, at the other side of the pulling vehicle, i.e., seen in the normal direction of travel, on the left side behind the pulling vehicle, and two swaths being formed.

The steering axis 12 is fastened in a stop seating plate (constituted in the figures by two sub-stop seating plates 18, 18'), which is disposed at least substantially transverse to the steering axis 12 and which is provided with stop seatings 19, 19', 20, 20' orientated towards the stop 17.

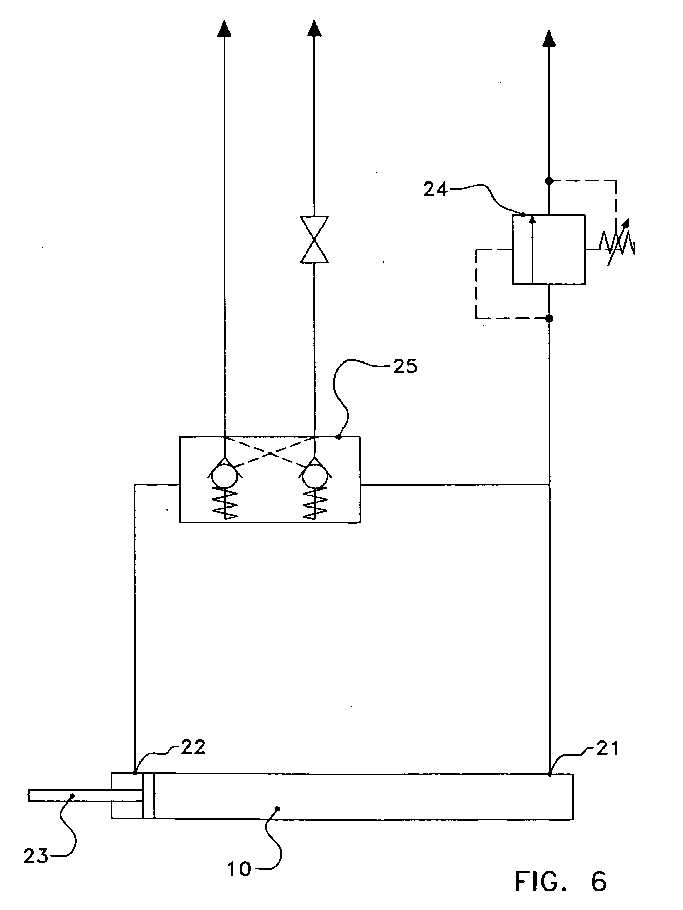

The hydraulic cylinder 10 has a first connection 21 and a second connection 22 for a hydraulic circuit as shown in more detail in Figure 6. The first connection 21 is connected, by means of a pressure relief valve 24, with the hydraulic circuit of a vehicle pulling the haymaking machine. Between the pressure relief valve 24 and the first connection 21, there is connected a branch leading to a double-controlled non-return valve 25, which non-return valve 25 also leads to the hydraulic circuit of the pulling vehicle. Said double-controlled non-return valve 25 is also connected with the second connection 22 of the hydraulic cylinder 10. Said hydraulic circuit ensures the movement of the piston 23 in the hydraulic cylinder 10.

When, in the situation that the stop 17 abuts against the stop seatings 19, 19'; 20, 20', an additional force is exerted on the cylinder, for example because of the pulling vehicle taking a still sharper bend, the pressure relief valve 24 ensures that hydraulic liquid is moved back (without pressure) to the pulling vehicle, so that the piston 23 is in fact retracted. Owing to this, an overload on the steering rod 9 and possibly on other components of the haymaking machine is prevented.

From EP-A1-0 709 019 it is known per se to include in a haymaking machine a foldable swath board for forming a swath, it being possible to move the swath board into its extreme position by means of a cylinder included in the hydraulic circuit of the folding cylinder of the crop processing members.

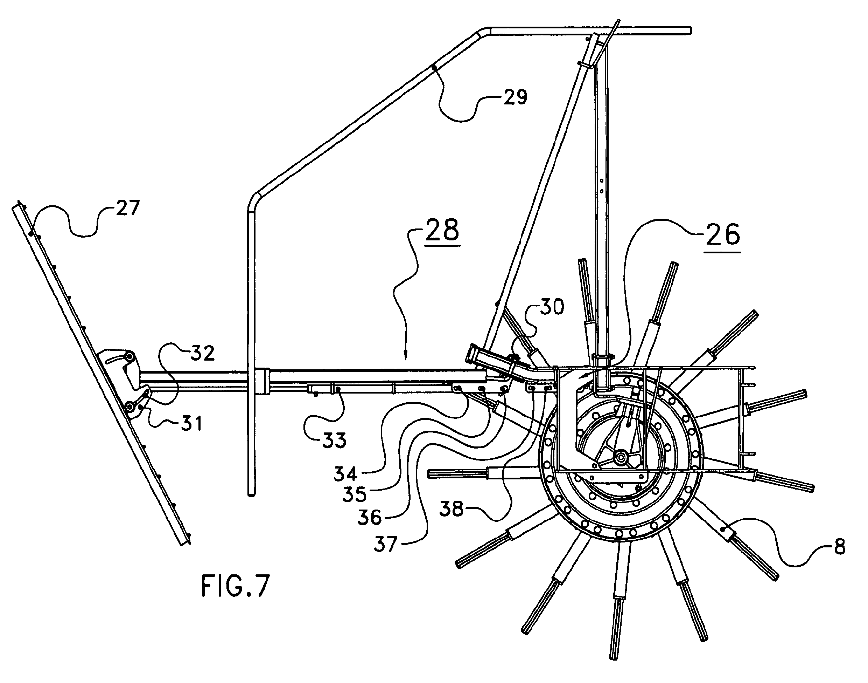

In an embodiment of the invention shown in Figure 7, the haymaking machine is provided with a carrier frame 26 connected with the drawbar 1 for carrying a crop processing member 8, a swath board 27 being fastened to a swath board frame 28, in the embodiment shown preferably integrated with the protective bracket 29 for the crop processing member 8, which is pivotably connected with the carrier frame 26 about a substantially horizontally extending axis 30. By means of a pivoting plate 31 provided with a slot 32 the orientation of the swath board 27 relative to the direction of travel of the haymaking machine is adjustable. For this purpose, it is possible to adjust the orientation before using the machine, for example by means of non-shown bolts and nuts. One end of the swath board cylinder 33 is connected with the swath board 27 and the other end of the swath board cylinder 33 is capable of being fasted in one of a number of fastening points 34 to 38 located at different distances from the drawbar 1, the fastening points 34, 35, 36 being provided on the swath board frame 28 and the fastening points 37, 38 being provided on the carrier frame 26. When the swath board cylinder 33 is fastened in one of the fastening points 34, 35, 36, the swath board (together with the protective bracket 29) can be folded up separately from the crop processing member 8, whereas this separate folding up movement cannot be carried out when the cylinder 33 is fastened in the fastening points 37, 38. By fastening in the different fastening points 34 to 38, different swath widths are adjustable.

## Claims

1. A haymaking machine provided with a drawbar (1) whose front end is fastened pivotably about a substantially upwardly orientated connecting axis (2) to a trestle (3) extending substantially transverse to the drawbar (1), and whose rear end is provided with a supporting wheel set (4) comprising two wheels (5, 6) disposed on either side of the drawbar (1), a pair of drivable crop processing members (7, 8) arranged on either side of the drawbar (1) and rotatable about substantially upwardly orientated rotor axes being disposed between said front end and rear end, the orientation of the wheels (5, 6) relative to the drawbar (1) being adjustable by means of a steering device, the steering device comprising a steering rod (9) which is pivotably connected both with the trestle (3) and with the wheel set (4), and a hydraulic cylinder (10) which has one end connected with the steering rod (9) and its other end with the wheel set (4), **characterized in that** the haymaking machine is adjustable into at least three operative positions while maintaining the direction of rotation of the crop processing members (7, 8): a first operative position with a first working width, in which the drawbar (1) with crop processing members (7, 8), seen in the normal direction of travel, is located straight behind a pulling vehicle and in which one swath is deposited, a second operative position with a second working width that is smaller than the first working width, in which the drawbar (1) with crop processing members (7, 8) is located at a first, positive angle with respect to the normal direction of travel behind the pulling vehicle and in which one swath is deposited, and a third operative position, in which the drawbar (1) with crop processing members (7, 8) is located at a second, negative angle with respect to the normal direction of travel behind the pulling vehicle and in which two swaths are deposited.

2. A haymaking machine as claimed in claim 1, **characterized in that** the first, positive angle is such an angle that, seen in the normal direction of travel, the drawbar (1) is located on the right side behind the pulling vehicle and the second, negative angle is such an angle that, seen in the normal direction of travel, the drawbar (1) is located on the left side behind the pulling vehicle.

3. A haymaking machine as claimed in any of claims 1 to 2 **characterized in that** the haymaking machine is provided with a steering plate (11) fastened to the rear end of the drawbar (1), which steering plate is pivotable about a substantially upwardly orientated steering axis (12) and comprises ends (13, 14) located on either side of the substantially upwardly orientated steering axis (12), the steering rod (9) being connected with one end (13, 14) of the steering plate (11), and **in that** a stop plate (15, 15') disposed at least substantially transverse to the upward steering axis (12) is connected with the steering axis (12), which stop plate (15, 15') is provided with an arched slot (16, 16') located at the side of the steering axis (12) opposite the trestle (3), one end of the hydraulic cylinder (10) being connectable with one end (13) or the other end (14) of the steering plate (11) and the other end of the hydraulic cylinder (10), which other end is connected with the wheel set (4), being fastened to a stop (17) which extends through the slot (16, 16') en is movably included in the slot (16, 16').

4. A haymaking machine as claimed in claim 3, **characterized in that** the steering axis (12) is located at least substantially in the middle of the drawbar (1).

5. A haymaking machine as claimed in claim 3 or 4, **characterized in that** the steering axis (12) is fastened to a stop seating plate (18, 18') which is disposed at least substantially transverse to the steering axis (12) and which is provided with stop seatings (19, 19'; 20, 20') orientated towards the stop (17).

6. A haymaking machine as claimed in any one of claims 3 to 5, **characterized in that** the hydraulic cylinder (10) is connected with a hydraulic circuit in which a pressure relief valve (24) is included.

7. A haymaking machine as claimed in any one of claims 3 to 6, **characterized in that** the haymaking machine is capable of being brought from the second operative position into the third operative position by turning the steering plate (11).

8. A haymaking machine as claimed in any one claims 1 to 7, **characterized in that** the haymaking machine is provided with a carrier frame (26) connected with the drawbar (1) for carrying a crop processing member (7, 8), the swath board (27) being fastened to a swath board frame (28) that is pivotably connected with the carrier frame (26) about a substantially horizontally extending axis (30).

9. A haymaking machine as claimed in claim 8, **characterized in that** the orientation of the swath board (27) is adjustable relative to the direction of travel of the haymaking machine.

10. A haymaking machine as claimed in claim 9, **characterized in that** one end of the swath board cylinder (33) is connected with the swath board (27) and the other end of the swath board cylinder (33) is capable of being fastened in one of a number of fastening points (34, 35, 36, 37, 38) located at different distances from the drawbar (1), the fastening points being provided on the swath board frame (28) and/or the carrier frame (26).

## Patentansprüche

1. Heuwerbungsmaschine, ausgestattet mit einer Zugstange (1), deren vorderes Ende drehbar um eine im Wesentlichen aufrecht ausgerichtete Verbindungsachse (2) an einem Anbaubock (3) befestigt ist, welcher sich im Wesentlichen quer zur Zugstange (1) erstreckt, und deren hinteres Ende mit einem Stützrädersatz (4) ausgestattet ist, welcher zwei auf jeweils einer Seite der Zugstange (1) angeordnete Räder (5, 6) umfasst, mit einem Paar antreibbarer Erntegutaufbereitungselemente (7, 8), welche jeweils auf einer Seite der Zugstange (1) angeordnet und um im Wesentlichen aufrecht ausgerichtete Rotorachsen drehbar sind, die zwischen dem vorderen Ende und dem hinteren Ende angeordnet sind, wobei die Ausrichtung der Räder (5, 6) relativ zur Zugstange (1) mittels einer Lenkvorrichtung einstellbar ist, wobei die Lenkvorrichtung eine Steuerstange (9) umfasst, welche drehbar sowohl mit dem Anbaubock (3) und mit dem Rädersatz (4) verbunden ist, und mit einem Hydraulikzylinder (10), dessen eines Ende mit der Steuerstange (9) und dessen anderes Ende mit dem Rädersatz (4) verbunden ist,
**dadurch gekennzeichnet, dass** die Heuwerbungsmaschine in wenigstens drei Betriebspositionen einstellbar ist, während sie die Richtung der Rotation der Erntegutaufbereitungselemente (7, 8) beibehält: eine erste Betriebsposition mit einer ersten Arbeitsbreite, in welcher die Zugstange (1) mit den Erntegutaufbereitungselementen (7, 8), betrachtet in der Fahrtrichtung, gerade hinter einem Zugfahrzeug angeordnet ist und in welcher eine Schwade abgelegt wird, eine zweite Betriebsposition mit einer zweiten Arbeitsbreite, welche kleiner ist als die erste Arbeitsbreite, in welcher die Zugstange (1) mit den Erntegutaufbereitungselementen (7, 8) in einem ersten positiven Winkel in Bezug auf die normale Fahrtrichtung hinter dem Zugfahrzeug angeordnet ist und in welcher eine Schwade abgelegt wird, und eine dritte Betriebsposition, in welcher die Zugstange (1) mit den Erntegutaufbereitungselementen (7, 8) in einem zweiten negativen Winkel in Bezug auf die normale Fahrtrichtung hinter dem Zugfahrzeug angeordnet ist und in welcher zwei Schwaden abgelegt werden.

2. Heuwerbungsmaschine nach Anspruch 1,
**dadurch gekennzeichnet, dass** der erste positive Winkel solch ein Winkel ist, bei dem in der normalen Fahrrichtung betrachtet, die Zugstange (1) auf der rechten Seite hinter dem Zugfahrzeug angeordnet ist, und der zweite negative Winkel solch ein Winkel ist, bei dem in der normalen Fahrrichtung betrachtet, die Zugstange (1) auf der linken Seite hinter dem Zugfahrzeug angeordnet ist.

3. Heuwerbungsmaschine nach einem der Ansprüche 1 bis 2,
**dadurch gekennzeichnet, dass** die Heuwerbungsmaschine mit einer Steuerplatte (11) ausgestattet ist, welche am hinteren Ende der Zugstange (1) befestigt ist, wobei die Steuerplatte um eine im Wesentlichen aufrecht ausgerichtete Lenkachse (12) drehbar ist und Enden (13, 14) umfasst, welche auf jeweils einer Seite der im Wesentlichen aufrecht ausgerichteten Lenkachse (12) angeordnet sind, wobei die Steuerstange (9) mit einem Ende (13, 14) der Steuerplatte (11) verbunden ist, und dass eine wenigstens im Wesentlichen quer zur aufrechten Lenkachse (12) angeordnete Anschlagplatte (15, 15') mit der Lenkachse (12) verbunden ist, wobei die Anschlagplatte (15, 15') mit einem bogenförmigen Schlitz (16, 16') ausgestattet ist, der auf der Seite der Lenkachse (12) gegenüber dem Anschlagbock (3) angeordnet ist, wobei ein Ende des Hydraulikzylinders (10) mit dem einen Ende (13) oder dem anderen Ende (14) der Steuerplatte (11) verbindbar ist und das andere Ende des Hydraulikzylinders (10), das mit dem Rädersatz (4) verbunden ist, an einem Anschlag (17) befestigt ist, welcher sich durch den Schlitz (16, 16') erstreckt und bewegbar in dem Schlitz (16, 16') aufgenommen ist.

4. Heuwerbungsmaschine nach Anspruch 3,
**dadurch gekennzeichnet, dass** die Lenkachse (12) wenigstens im Wesentlichen in der Mitte der Zugstange (1) angeordnet ist.

5. Heuwerbungsmaschine nach Anspruch 3 oder 4,
**dadurch gekennzeichnet, dass** die Lenkachse (12) an einer Anschlagsitzplatte (18, 18') befestigt ist, welche wenigstens im Wesentlichen quer zur Lenkachse (12) angeordnet ist und welche mit Anschlagsitzen (19, 19'; 20, 20') ausgestattet ist, die auf den Anschlag (17) ausgerichtet sind.

6. Heuwerbungsmaschine nach einem der Ansprüche 3 bis 5,
**dadurch gekennzeichnet, dass** der Hydraulikzylinder (10) mit einem Hydraulikkreis verbunden ist, in welchem ein Überdruckventil (24) enthalten ist.

7. Heuwerbungsmaschine nach einem der Ansprüche 3 bis 6,
**dadurch gekennzeichnet, dass** die Heuwerbungsmaschine von der zweiten Betriebsposition in die dritte Betriebsposition durch Drehen der Steuerplatte (11) gebracht werden kann.

8. Heuwerbungsmaschine nach einem der Ansprüche 1 bis 7,
**dadurch gekennzeichnet, dass** die Heuwerbungsmaschine mit einem Trägerrahmen (26) vorgesehen ist, welcher mit der Zugstange (1) zum Tragen eines Erntegutaufbereitungselements (7, 8) verbunden ist, wobei das Schwadblech (27) an einem Schwadblechrahmen (28) befestigt ist, welcher drehbar mit dem Trägerrahmen (26) um eine sich im Wesentlichen horizontal erstreckende Achse (30) verbunden ist.

9. Heuwerbungsmaschine nach Anspruch 8,
**dadurch gekennzeichnet, dass** die Ausrichtung des Schwadblechs (27) relativ zur Fahrtrichtung der Heuwerbungsmaschine einstellbar ist.

10. Heuwerbungsmaschine nach Anspruch 9,
**dadurch gekennzeichnet, dass** ein Ende des Schwadblechzylinders (33) mit dem Schwadblech (27) verbunden ist und das andere Ende des Schwadblechzylinders (33) geeignet ist, an einem Punkt aus einer Anzahl von Befestigungspunkten (34, 35, 36, 37, 38) befestigt zu werden, welche in unterschiedlichen Abständen von der Zugstange (1) angeordnet sind, wobei die Befestigungspunkte auf dem Schwadblechrahmen (28) und/oder dem Trägerrahmen (26) vorgesehen sind.

## Revendications

1. Machine à fenaison dotée d'une barre de traction (1) dont l'extrémité avant est fixée de manière à pouvoir pivoter autour d'un axe de liaison (2) orienté sensiblement vers le haut à un chevalet (3) s'étendant sensiblement transversalement à la barre de traction (1), et dont l'extrémité arrière est dotée d'un ensemble de roues de support (4) comprenant deux roues (5, 6) disposées de chaque côté de la barre de traction (1), une paire d'éléments de traitement (7, 8) d'une récolte agencés de chaque côté de la barre de traction (1) et pouvant tourner autour d'axes de rotor orientés sensiblement vers le haut et disposés entre lesdites extrémité avant et extrémité arrière, l'orientation des roues (5, 6) par rapport à la barre de traction (1) pouvant être ajustée à l'aide d'un dispositif de direction, le dispositif de direction comprenant une bielle de direction (9) qui est reliée de manière pivotante à la fois au chevalet (3) et à l'ensemble de roues (4), et un vérin hydraulique (10) dont une extrémité est reliée à la bielle de direction (9) et l'autre extrémité à l'ensemble de roues (4), **caractérisée en ce que** la machine à fenaison peut être ajustée dans au moins trois positions opérationnelles tout en maintenant la direction de rotation des éléments de traitement d'une récolte (7, 8) : une première position opérationnelle avec une première largeur de travail, dans laquelle la barre de traction (1) avec les éléments de traitement d'une récolte (7, 8), vu dans la direction normale de déplacement, est située juste derrière un véhicule tracteur et dans laquelle un andain est déposé, une deuxième position opérationnelle avec une deuxième largeur de travail inférieure à la première largeur de travail, dans laquelle la barre de traction (1) avec les éléments de traitement d'une récolte (7, 8) est située à un premier angle positif par rapport à la direction normale de déplacement derrière le véhicule tracteur et dans laquelle un andain est déposé, et une troisième position opérationnelle, dans laquelle la barre de traction (1) avec les éléments de traitement d'une récolte (7, 8) est située à un second angle négatif par rapport à la direction normale de déplacement derrière le véhicule tracteur et dans laquelle deux andains sont déposés.

2. Machine à fenaison selon la revendication 1, **caractérisée en ce que** le premier angle positif est un angle tel que, vu dans la direction normale de déplacement, la barre de traction (1) est située sur le côté droit derrière le véhicule tracteur et le second angle négatif est un angle tel que, vu dans la direction normale de déplacement, la barre de traction (1) est située sur le côté gauche derrière le véhicule tracteur.

3. Machine à fenaison selon l'une quelconque des revendications 1 à 2, **caractérisée en ce que** la machine à fenaison est dotée d'une plaque de direction (11) fixée à l'extrémité arrière de la barre de traction (1), laquelle plaque de direction peut pivoter autour d'un axe de direction (12) orienté sensiblement vers le haut et comprend des extrémités (13, 14) situées de chaque côté de l'axe de direction orienté sensiblement vers le haut (12), la bielle de direction (9) étant reliée à une extrémité (13, 14) de la plaque de direction (11), et **en ce qu'**une plaque d'arrêt (15, 15') disposée au moins sensiblement transversalement à l'axe de direction ascendant (12) est reliée à l'axe de direction (12), laquelle plaque d'arrêt (15, 15') est dotée d'une fente cintrée (16, 16') située sur le côté de l'axe de direction (12) opposé au chevalet (3), une extrémité du vérin hydraulique (10) pouvant être reliée à une extrémité (13) ou à l'autre extrémité (14) de la plaque de direction (11) et à l'autre extrémité du vérin hydraulique (10), laquelle autre extrémité est reliée à l'ensemble de roues (4), étant fixée à une butée (17) qui s'étend au travers de la fente (16, 16') et est incluse de manière mobile dans la fente (16, 16').

4. Machine à fenaison selon la revendication 3, **caractérisée en ce que** l'axe de direction (12) est situé au moins sensiblement au milieu de la barre de traction (1).

5. Machine à fenaison selon la revendication 3 ou 4, **caractérisé en ce que** l'axe de direction (12) est fixé à une plaque de logement de butée (18, 18') qui est disposée au moins sensiblement transversalement à l'axe de direction (12) et qui est dotée de logements de butée (19, 19' ; 20, 20') orientés vers la butée (17).

6. Machine à fenaison selon l'une quelconque des revendications 3 à 5, **caractérisée en ce que** le vérin hydraulique (10) est relié à un circuit hydraulique comprenant une soupape de décharge (24).

7. Machine à fenaison selon l'une quelconque des revendications 3 à 6, **caractérisée en ce que** la machine à fenaison est apte à être amenée de la deuxième position opérationnelle à la troisième position opérationnelle en tournant la plaque de direction (11).

8. Machine à fenaison selon l'une quelconque des revendications 1 à 7, **caractérisée en ce que** la machine à fenaison est dotée d'un cadre porteur (26) relié à la barre de traction (1) pour porter un élément de traitement d'une récolte (7, 8), la planche à andain (27) étant fixée à un cadre de planche à andain (28) qui est relié au cadre porteur (26) de manière pivotante autour d'un axe (30) s'étendant sensiblement horizontalement.

9. Machine à fenaison selon la revendication 8, **caractérisée en ce que** l'orientation de la planche à andain (27) peut être ajustée par rapport à la direction de déplacement de la machine à fenaison.

10. Machine à fenaison selon la revendication 9, **caractérisée en ce qu'**une extrémité du cylindre de planche à andain (33) est reliée à la planche à andain (27) et l'autre extrémité du cylindre de planche à andain (33) est apte à être fixée à l'un de la pluralité de points de fixation (34, 35, 36, 37, 38) situés à différentes distances de la barre de traction (1), les points de fixation étant positionnés sur le cadre de planche à andain (28) et/ou le cadre porteur (26).
